# EUROPÄISCHE PATENTSCHRIFT

(11) **EP 4 115 218 B1**
(45) Veröffentlichungstag und Bekanntmachung des Hinweises auf die Patenterteilung: **29.01.2025**
(21) Anmeldenummer: 21706568.9
(22) Anmeldetag: 18.02.2021
(51) Int. Cl.: G02B 5/30, G02B 27/01, G02B 27/09

(54) **ANORDNUNG ZUR REFLEXIONSUNTERDRÜCKUNG BEI EINEM FRONTSCHEIBENANZEIGESYSTEM SOWIE FRONTSCHEIBENANZEIGESYSTEM**
ARRANGEMENT FOR REFLECTION SUPPRESSION IN A WINDSCREEN DISPLAY SYSTEM, AND WINDSCREEN DISPLAY SYSTEM
AGENCEMENT POUR LA SUPPRESSION DE RÉFLEXION DANS UN SYSTÈME D'AFFICHAGE DE PARE-BRISE, ET SYSTÈME D'AFFICHAGE DE PARE-BRISE

(30) Priorität: 06.03.2020 DE 102020106160
(43) Veröffentlichungstag der Anmeldung: 11.01.2023
(73) Patentinhaber: Bayerische Motoren Werke Aktiengesellschaft, 80809 München (DE)
(72) Erfinder: JANZER, Michael Arthur, 85716 Unterschleißheim (DE)
(86) Internationale Anmeldenummer: PCT/EP2021/054026
(87) Internationale Veröffentlichungsnummer: WO 2021/175608

(56) Entgegenhaltungen:
- EP-A1- 3 133 436
- DE-A1- 102010 032 998
- DE-A1- 102019 201 475
- DE-A1- 3 822 222
- JP-A- 2003 057 587
- JP-A- 2015 034 918
- JP-A- 2018 059 965

## Beschreibung

### Technisches Gebiet

Die Erfindung betrifft Frontscheibenanzeigesysteme, insbesondere mit Head-up-Display-Einrichtungen, für Kraftfahrzeuge. Insbesondere betrifft die vorliegende Erfindung Maßnahmen zur Unterdrückung von Störreflexionen durch in eine Projektionseinrichtung der Head-up-Display-Einrichtung einfallendes Umgebungslicht.

### Stand der Technik

Frontscheibenanzeigeeinrichtungen, wie Head-up-Display-Einrichtungen, zur visuellen Anzeige von Informationen im Blickfeld eines Fahrers eines Kraftfahrzeugs sind aus dem Stand der Technik bekannt. Beispielsweise beschreibt die Druckschrift DE 10 2010 032 998 A1 ein Head-up-Display für ein Kraftfahrzeug mit einer Projektionseinrichtung, über die ein anzuzeigendes Bild auf eine als Kombiniereinrichtung wirkende Frontscheibe eines Kraftfahrzeugs projiziert wird. Derartige Frontscheibenanzeigeeinrichtungen haben im Unterschied zu den übrigen Anzeigeeinrichtungen im Kraftfahrzeug den Vorteil, dass der Fahrer den Blick nicht von dem Verkehrsgeschehen abwenden muss, um wichtige Informationen, wie zum Beispiel die momentane Fahrzeuggeschwindigkeit oder optische Anweisungen eines Navigationssystems zu erfassen.

Bei bekannten Head-up-Display-Einrichtungen werden Maßnahmen vorgesehen, um zu vermeiden, dass Umgebungslicht, das in eine Projektionseinrichtung der Head-up-Display-Einrichtung fällt, auf die Frontscheibe des Kraftfahrzeugs reflektiert wird, von dort in Richtung des Fahrers reflektiert wird und diesen dadurch blendet und/oder die Darstellung der anzuzeigenden Information beeinträchtigt. Daher ist die Projektionseinrichtung in der Regel mit einer reflektierenden und gekrümmten Abdeckscheibe versehen, die einfallendes Umgebungslicht in Richtung einer lichtabsorbierenden Fläche, auch Spiegelbank genannt, reflektiert. Das reflektierte Umgebungslicht wird an der lichtabsorbierenden Fläche nur in geringem Maß reflektiert, so dass störende Reflexionen von Umgebungslicht oder Ausleuchtungen in einem Anzeigebereich auf der Frontscheibe im Wesentlichen vermieden werden können.

Head-up-Display-Einrichtungen werden üblicherweise in einer Oberseite einer Instrumententafel im Bereich über der Lenksäule eingesetzt, wo in der Regel nur ein begrenzter Bauraum zur Verfügung steht. In der Regel weist die herkömmliche Baugruppe aus der lichtabsorbierenden Fläche und der reflektierenden gekrümmten Abdeckscheibe jedoch eine Bauhöhe zwischen 5 und 10 cm auf, die die Gesamtbauhöhe der Head-up-Display-Einrichtung erheblich vergrößert. Eine Reduzierung der Bauhöhe dieser Baugruppe kann nur bedingt erreicht werden, da bei einer flacheren, d.h. weniger gekrümmten Abdeckscheibe, eine größere Höhe der lichtabsorbierenden Fläche benötigt wird.

Aus der Druckschrift DE 10 2017 206 364 A1 ist eine Anordnung zur Reflexionsminderung für eine Frontscheibenanzeigeeinrichtung für ein Kraftfahrzeug bekannt, umfassend: eine transparente Abdeckscheibe zum Schutz einer Projektionseinrichtung und ein optisches Gitter, mit dem ein transparentes Substrat der Abdeckscheibe versehen ist und das ausgebildet ist, um aus der Umgebung auf eine erste Flächenseite der Abdeckscheibe unter einem Einfallswinkel innerhalb eines Einfallswinkelbereichs einfallendes Licht zu absorbieren und auf eine zweite Flächenseite der Abdeckscheibe unter einem Einfallswinkel innerhalb eines Projektionswinkelbereichs einfallendes Projektionslicht zu transmittieren.

Aus den Druckschriften DE 10 2014 214 510 A1 sowie DE 10 2017 219 069 A1 sind Anordnungen zur Reflexionsbehinderung für eine Frontscheiben-Anzeigeeinrichtung bekannt, die ein optisches Gitter aus Gitterelementen aufweisen und dadurch segmentierte Spiegelbänke realisieren. Da die Gitterelemente des Gitters im Strahlengang der Frontscheiben-Anzeigeeinrichtung angeordnet sind, müssen die Gitterelemente eine geringe Dicke aufweisen und zudem in ihrem Anstellwinkel möglichst parallel zum Strahlengang der dazu benachbarten Lichtstrahlen ausgerichtet sein.

Aus der Druckschrift DE 10 2017 215 378 B4 ist ein Kraftfahrzeug mit einer Anzeigevorrichtung bekannt, die wenigstens ein Mehrfachdisplay aufweist, wobei die Anzeigevorrichtung derart im Sichtfeld eines Fahrers des Kraftfahrzeugs angeordnet ist, dass ein erster Blickwinkelbereich dem eines Fahrers auf die Anzeigevorrichtung entspricht und ein zweiter Blickwinkelbereich auf einen in Richtung des Fahrers spiegelnd ausgebildeten, einer Scheibenwurzel der Windschutzscheibe benachbarten Spiegelungsabschnitt gerichtet ist.

Eine solche hierin Scheibenwurzel-Display-Einrichtung genannte Anzeigevorrichtung ist in der Regel unter einem Spiegelungsbereich an einer unteren Kante einer Frontscheibe eines Kraftfahrzeugs angeordnet. Eine Scheibenwurzel-Display-Einrichtung weist eine selbstleuchtende Anzeigefläche auf, über die eine Bildinformation ausgegeben werden kann. Diese Bildinformation wird an dem Spiegelungsbereich der Frontscheibe reflektiert und ist über diesen von dem Fahrer wahrnehmbar.

Bei einer Kombination einer herkömmlichen Head-up-Display-Einrichtung mit einer Scheibenwurzel-Display-Einrichtung kann dies dazu führen, dass die Spiegelbank zumindest teilweise die Sicht auf den Spiegelungsbereich der Scheibenwurzel-Display-Einrichtung blockiert. Aufgrund des eingeschränkten Bauraums in dem Armaturenbrett kann jedoch eine Projektionseinrichtung der Frontscheiben-Anzeigevorrichtung nicht in beliebiger Weise abgesenkt werden, so dass sich entweder die Deckscheibe der Frontscheiben-Anzeigevorrichtung oder die Spiegelbank im Strahlengang zur Wahrnehmung der Scheibenwurzel-Display-Einrichtung befindet.

Die Druckschrift DE 10 2019 201 475 A1 offenbart eine Fahrzeuganzeigevorrichtung, umfassend eine Anzeige, die als Anzeigelicht ein auf ein Projizierungselement projiziertes Anzeigebild emittiert, das in einem Fahrzeug vorgesehen ist; und ein Abdeckelement, das eine in einem Gehäuse vorgesehene Öffnung blockiert und wenigstens einen Teil des Anzeigelichts durchlässt. Das Abdeckelement umfasst eine Lichtabschirmungswand, die an einem Vorderkantenabschnitt des Fahrzeugs in einer vorne-hinten-Richtung montiert ist und auf einem optischen Weg von externem Licht angeordnet ist, das von außerhalb des Fahrzeugs einfällt, reflektiert durch das Abdeckelement, und von dem Abdeckelement über das Projizierungselement zu einem Augenpunkt eines Fahrers des Fahrzeugs gerichtet ist. Das Abdeckelement reflektiert das von der Anzeige emittierte Anzeigelicht in Richtung eines reflektierenden Elements, lässt das von dem reflektierenden Element reflektierte Anzeigelicht in Richtung des Projizierungselements durch und reflektiert das externe Licht zur Lichtabschirmungswand.

Die Druckschrift DE 10 2010 032998 A1 offenbart ein Head-Up-Display für ein Kraftfahrzeug, umfassend wenigstens eine Projektionseinrichtung, über welche ein anzuzeigendes Bild auf eine als Kombiniereinrichtung wirkende Frontscheibe des Kraftfahrzeugs projiziert wird, wobei die Projektionseinrichtung zur Frontscheibe gerichtet eine semitransparente Abdeckung aufweist, die zur Reflexion von von außen auf die Abdeckung auftreffendem Fremdlicht auf eine Absorberfläche ausgebildet ist, wobei die Absorberfläche wenigstens teilweise durch eine innenseitige Beschichtung der Frontscheibe gebildet wird.

Die Druckschrift DE 38 22 222 A1 offenbart eine optische Einrichtung an einem Kraftfahrzeug zur Einspiegelung bildhaft dargestellter Anzeigen, die mittels Anzeigenelemente durch einen Lichtstrom in einem Schacht im Bereich der Armaturenabdeckung erzeugt und über eine Optik durch eine Austrittsöffnung des Schachtes in das Sichtfeld des Fahrers auf die Windschutzscheibe projiziert werden, die in diesem Bereich durch Folien oder Scheiben reflektiert werden, wobei im Bereich der Austrittsöffnung im Strahlengang des Lichtstromes ein erstes Polarisationsfilter angebracht ist und dass ein zweites Polarisationsfilter vorgesehen ist, das im Bereich der Innenseite der Windschutzscheibe angeordnet ist und in seiner Polarisationsrichtung in etwa senkrecht zum ersten Polarisationsfilter steht.

Es ist daher Aufgabe der vorliegenden Erfindung, ein verbessertes Anzeigesystem mit einer Head-up-Display-Einrichtung zur Verfügung zu stellen, die eine Reflexionsunterdrückung aufweist und die mit einer Scheibenwurzel-Display-Einrichtung kombinierbar ist, ohne die Reflexionsunterdrückung zu beeinträchtigen.

### Offenbarung der Erfindung

Diese Aufgabe wird durch ein Frontscheiben-Anzeigesystem für ein Kraftfahrzeug zur Reflexionsunterdrückung gemäß Anspruch 1 gelöst.

Weitere Ausgestaltungen sind in den abhängigen Ansprüchen angegeben.

Gemäß einem Aspekt ist ein Frontscheibenanzeigesystem für ein Kraftfahrzeug mit einer Head-up-Display-Einrichtung vorgesehen, wobei die Head-up-Display-Einrichtung eine Projektionseinrichtung zum Aussenden eines Projektionslichtstrahlenbündels mit einer ersten Bildinformation in Richtung eines ersten Anzeigebereichs einer Frontscheibe, so dass diese dort reflektiert und in einem Augenbereich wahrnehmbar ist, und eine transparente Abdeckung zum Schutz der Projektionseinrichtung aufweist, wobei die Abdeckung eine Deckscheibe und einen ersten Polarisationsfilter aufweist, wobei der erste Polarisationsfilter Licht einer ersten Polarisationsrichtung transmittiert und Licht einer zweiten Polarisationsrichtung vollständig reflektiert.

Weiterhin ist die Abdeckung so angeordnet und insbesondere gekrümmt ausgebildet, dass der reflektierte Anteil des Umgebungslichts in der zweiten Polarisationsrichtung größtenteils auf einen Scheibenwurzelbereich reflektiert wird. Der Scheibenwurzelbereich ist mit einem zweiten Polarisationsfilter versehen, der ausgebildet ist, um Licht einer ersten Polarisationsrichtung zu reflektieren und Licht einer zweiten Polarisationsrichtung zu transmittieren. Mithifle einer Scheibenwurzel-Display-Einrichtung wird über eine Anzeigeeinrichtung eine zweite Bildinformation ausgegeben, so dass diese in dem Scheibenwurzelbereich so reflektiert wird, dass die reflektierte zweite Bildinformation in dem Augenbereich wahrnehmbar ist, wobei die Anzeigeeinrichtung die zweite Bildinformation mit Licht der ersten Polarisationsrichtung ausgibt.

Eine Idee des obigen Frontscheiben-Anzeigesystem besteht darin, die Abdeckung einer Projektionseinrichtung einer Head-up-Display-Einrichtung mit einem ersten Polarisationsfilter zu versehen. Die Head-up-Display-Einrichtung dient zur Ausgabe einer ersten Bildinformation durch Reflexion eines Bildinformations-Lichtstrahlenbündels an einem Combiner-Bereich der Frontscheibe in ein Auge des Fahrers des Kraftfahrzeugs. Die Abdeckung dient dem Schutz der Projektionseinrichtung vor äußeren Einflüssen, wie beispielsweise Verschmutzung.

Der erste Polarisationsfilter ist ausgebildet, um lediglich Licht einer ersten Polarisationsrichtung, wie beispielsweise s-polarisiertes Licht oder p-polarisiertes Licht, zu transmittieren und Licht einer zweiten Polarisationsrichtung, p-polarisiertes Licht bzw. s-polarisiertes Licht, zu reflektieren. Die Abdeckung weist eine Anordnung und Ausrichtung auf, um auf die Abdeckung einfallendes Umgebungslicht auf einen Scheibenwurzelbereich zu reflektieren, der an einen unteren Rand einer Frontscheibe angrenzenden Bereich der Frontscheibe eines Kraftfahrzeugs entspricht. Dieser Scheibenwurzelbereich übernimmt die Funktion einer Spiegelbank herkömmlicher Head-up-Display-Einrichtungen.

Der Scheibenwurzelbereich weist einen zweiten Polarisationsfilter auf, dessen Polarisations-Verhalten bezüglich des ersten Polarisationsfilters eine um 90° verdrehten Polarisationsrichtung aufweist. Der zweite Polarisationsfilter ist somit ausgebildet, Licht der ersten Polarisationsrichtung in die Frontscheibe zu transmittieren und Licht der zweiten Polarisationsrichtung zu reflektieren. Mit anderen Worten, reflektiert der erste Polarisationsfilter p-polarisiertes Licht und transmittiert dieser s-polarisiertes Licht, so ist der zweite Polarisationsfilter ausgelegt, s-polarisiertes Licht zu reflektieren und p-polarisiertes Licht zu transmittieren und umgekehrt. Dadurch wird verhindert, dass im Scheibenwurzelbereich von der Abdeckung reflektiertes Umgebungslicht erneut reflektiert wird und ins Auge des Fahrers gelangt, so dass dieser geblendet wird.

Durch die Nutzung von Polarisationsfiltern auf der Deckscheibe der Abdeckung und in dem Scheibenwurzelbereich der Frontscheibe kann zum einen der Scheibenwurzelbereich als Spiegelbank für die Head-up-Display-Einrichtung verwendet werden. Gleichzeitig kann über den Scheibenwurzelbereich Licht mit einer zweiten Polarisationsrichtung reflektiert werden. Damit ist es grundsätzlich möglich, zusätzlich eine Scheibenwurzel-Display-Einrichtung zum Bereitstellen einer zweiten Bildinformation vorzusehen, das die zweite Bildinformation mit Projektionslicht der ersten Polarisationsrichtung ausgibt, das über den Polarisationsfilter auf dem Scheibenwurzelbereich der Frontscheibe reflektiert wird.

Dagegen wird Licht der zweiten Polarisationsrichtung durch den zweiten Polarisationsfilter transmittiert und durch den Scheibenwurzelbereich transmittiert. Gemäß einer Ausführungsform kann der Scheibenwurzelbereich als Schwarzdruckbereich ausgebildet sein, so dass Licht der zweiten Polarisationsrichtung durch den zweiten Polarisationsfilter transmittiert und in dem Schwarzdruckbereich absorbiert wird. Daher wird auch das Licht, das an dem ersten Polarisationsfilter in den Scheibenwurzelbereich reflektiert wird und Licht der zweiten Polarisationsrichtung darstellt, in die Frontscheibe eingekoppelt und transmittiert bzw. absorbiert.

Dadurch erreicht man eine Kompatibilität einer Scheibenwurzel-Display-Einrichtung mit einer Head-up-Display-Einrichtung in kompakter Bauweise, wobei keine Spiegelbank die Sicht auf den Scheibenwurzelbereich verdeckt und wobei eine Blendung des Fahrers durch an der Abdeckung reflektiertes Umgebungslicht reduziert bzw. unterbunden ist. Durch die gleichzeitige Nutzung des Scheibenwurzelbereichs der Frontscheibe sowohl als Spiegelbank für die Head-up-Display-Einrichtung als auch als Anzeigefläche für die Scheibenwurzel-Display-Einrichtung kann darüber hinaus auch die übliche Krümmung der Deckscheibe der Abdeckung reduziert werden und damit die Bauhöhe der Head-up-Display-Einrichtung verringert werden.

Insbesondere kann der erste und/oder der zweite Polarisationsfilter als Drahtgitter-Polarisator oder als Mehrschicht-Reflexionspolarisator ausgebildet sein.

Weiterhin können die erste Polarisationsrichtung einer s-Polarisationsrichtung und die zweite Polarisationsrichtung einer p-Polarisationsrichtung entsprechen oder die erste Polarisationsrichtung einer p-Polarisationsrichtung und die zweite Polarisationsrichtung einer s-Polarisationsrichtung entsprechen.

### Kurzbeschreibung der Zeichnung

Ausführungsformen werden nachfolgend anhand der beigefügten Zeichnungen näher erläutert. Es zeigen:
- Figur 1: eine schematische Querschnittsdarstellung durch ein Frontscheiben-Anzeigesystem für ein Kraftfahrzeug; und
- Figur 2: eine Querschnittsdarstellung durch eine Abdeckung mit einer Deckscheibe mit einem Drahtgitter-Polarisator.

### Beschreibung von Ausführungsformen

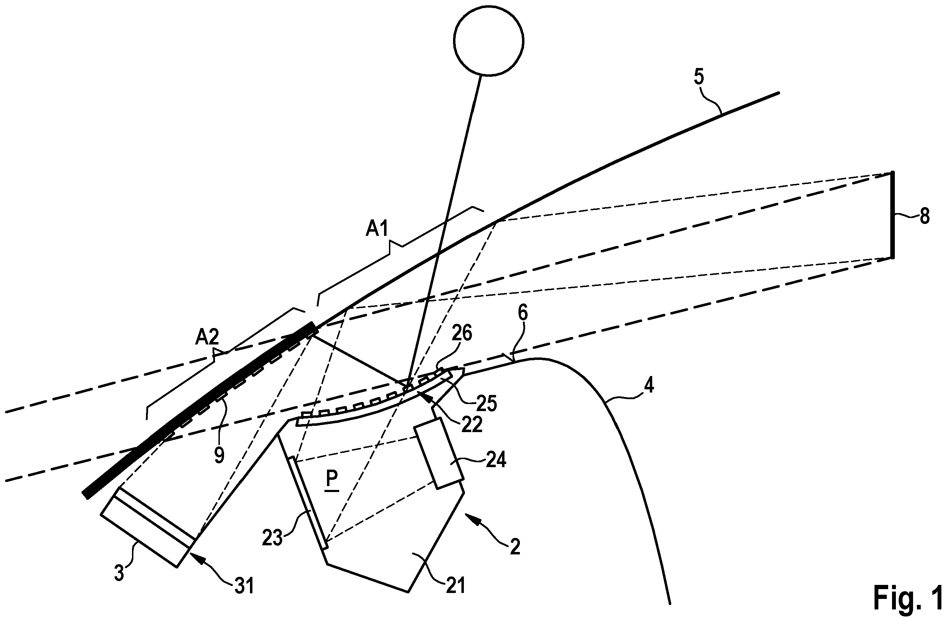

Figur 1 zeigt schematisch eine Querschnittsdarstellung durch ein Frontscheiben-Anzeigesystem 1 mit einer Head-up-Display-Einrichtung 2 und einer Scheibenwurzel-Display-Einrichtung 3. Die Head-up-Display-Einrichtung 2 umfasst eine Projektionseinrichtung 21 zum Aussenden eines Projektionslichtstrahlenbündels P mit einer ersten Bildinformation und eine Abdeckung 22. Das Projektionsstrahlenbündel P ist auf einen ersten Anzeigebereich A1 einer Frontscheibe 5 eines Kraftfahrzeugs gerichtet, so dass dieses dort in einen Augenbereich 8 (Eyebox) des Fahrers reflektiert wird.

Die Abdeckung 22 dient dem Schutz der Projektionseinrichtung 21 vor äußeren Einflüssen, insbesondere vor Verschmutzung. Die Abdeckung 22 der Projektionseinrichtung 21 weist eine Deckscheibe 25 auf und ist vorzugsweise gekrümmt, um einfallendes Umgebungslicht zu bündeln und zielgerichtet zu reflektieren.

Die Head-up-Display-Einrichtung 2 ist im Wesentlichen in eine Öffnung einer Oberseite 6 einer Instrumententafel 4 zwischen einem Lenkrad und einer Frontscheibe 5 eines Kraftfahrzeugs so eingesetzt, dass diese im Wesentlichen bündig mit der Oberseite 6 abschließt bzw. an diese angrenzt.

Die Projektionseinrichtung 21 umfasst in bekannter Weise ein System aus einem oder mehreren Spiegeln 23, gegebenenfalls Linsen (nicht gezeigt) und einen Projektor 24. Die von dem Projektor 24 ausgegebene erste Bildinformation wird als Projektionslichtstrahlenbündel P durch den einen oder die mehreren Spiegel 23 in die Projektionsrichtung ausgerichtet und auf den Anzeigebereich A1 projiziert. Das in dem ersten Anzeigebereich A1 ins Auge des Fahrers reflektierte Projektionslichtstrahlenbündel P dient zur Darstellung einer entsprechenden Information für den Fahrer.

Unterhalb des ersten Anzeigebereichs A1 ist ein zweiter Anzeigebereich A2. Der zweite Anzeigebereich A2, hierin auch Scheibenwurzelbereich genannt, ist zwischen dem unteren Rand der Frontscheibe 5 und dem ersten Anzeigebereich A1 angeordnet. Der zweite Anzeigebereich A2 kann sich beispielsweise unmittelbar an den unteren Rand der Frontscheibe 5 anschließen. Die Anzeigebereiche A1 und A2 können aneinander angrenzen oder einen Abstand zueinander aufweisen.

Der zweite Anzeigebereich A2 ist als Schwarzdruckbereich ausgebildet, um eine Transmission von Licht zu unterbinden und um eine auf einer Scheibenwurzel-Display-Einrichtung 3 angezeigte zweite Bildinformation so zu reflektieren, dass die reflektierte Abbildung von dem Fahrer wahrgenommen werden kann, auf den auch das Projektionslichtstrahlenbündel der Head-up-Display-Einrichtung 2 gerichtet ist.

Die Scheibenwurzel-Display-Einrichtung 3 kann eine einfache selbstleuchtende Anzeigeeinrichtung 31, insbesondere in Form eines LCD-Anzeige mit Backlight oder einer OLED-Anzeigeeinrichtung, umfassen, die so zu dem zweiten Anzeigebereich A2 angeordnet und ausgerichtet ist, damit das dort angezeigte zweite Bildinformation von dem Fahrer in dem Augenbereich 8 wahrgenommen werden kann.

Somit kann der Fahrer sowohl die zweite Bildinformation der Scheibenwurzel-Display-Einrichtung 3 als auch die erste Bildinformation der Head-up-Display-Einrichtung 2 gleichzeitig über den zweiten bzw. ersten Anzeigebereich A2, A1 wahrnehmen. Vorzugsweise sind die Anzeigebereiche A1, A2 in vertikaler Richtung übereinander angeordnet. Jedoch können diese auch alternativ oder zusätzlich lateral versetzt zueinander angeordnet sein.

Die Deckscheibe 25 der Abdeckung 22 der Projektionseinrichtung 21 ist gekrümmt, so dass einfallendes Umgebungslicht in den Scheibenwurzelbereich reflektiert wird. Der Scheibenwurzelbereich soll daher als Spiegelbank für auf die Abdeckung einfallendes Umgebungslicht dienen. Da der zweite Anzeigebereich A2, insbesondere wenn dieser als Schwarzdruckbereich ausgebildet ist, ohne weitere Maßnahmen stark lichtreflektierend ist, könnte dies dazu führen, dass der Fahrer durch erneute Reflexion des an der Abdeckung reflektierten Umgebungslichts geblendet wird.

Um dies zu vermeiden, ist vorgesehen, die Abdeckung 22 mit einem ersten Polarisationsfilter 26 zu versehen, der Licht einer ersten Polarisationsrichtung transmittiert, in die Deckscheibe 25 einkoppelt und durch die Deckscheibe 25 der Abdeckung 22 ins Innere der Projektionseinrichtung 21 leitet, während Licht einer zweiten Polarisationsrichtung vollständig reflektiert wird. Durch die Krümmung der Deckscheibe 25 wird das Licht der zweiten Polarisationsrichtung in den Scheibenwurzelbereich A2 reflektiert.

Der erste Polarisationsfilter 26 kann als Drahtgitter-Polarisator oder als sonstiger reflektiver Polarisator, insbesondere als Mehrschicht-Polarisator ausgebildet sein, der die oben genannten Eigenschaften aufweist.

Der Scheibenwurzelbereich A2 weist einen zweiten Polarisationsfilter 9 auf, der das Licht der zweiten Polarisationsrichtung in den Scheibenwurzelbereich A2 einkoppelt und dort entweder transmittiert wird oder, wenn dieser als Schwarzdruckbereich ausgebildet ist, absorbiert wird. Licht der ersten Polarisationsrichtung wird dagegen durch den zweiten Polarisationsfilter 9 reflektiert.

Dieses Verhalten wird durch die Scheibenwurzel-Display-Einrichtung 3 genutzt, die die zweite Bildinformation mit Licht der ersten Polarisationsrichtung ausgibt. Dadurch kann die zweite Bildinformation trotz des Vorsehens des zweiten Polarisationsfilters 9 in dem Scheibenwurzelbereich A2 vollständig in Richtung des Fahrers bzw. des Augenbereichs 8 reflektiert werden.

Im Ergebnis werden beide Bildinformationen, d.h. die erste Bildinformation der Head-up-Display-Einrichtung und die zweite Bildinformation der Scheibenwurzel-Display-Einrichtung, durch Licht einer ersten Polarisationsrichtung dargestellt.

Die erste Polarisationsrichtung kann einer s-Polarisationsrichtung entsprechen, und die zweite Polarisationsrichtung einer p-Polarisationsrichtung. Jedoch ist es auch möglich, die erste Polarisationsrichtung als p-Polarisationsrichtung und die zweite Polarisationsrichtung als s-Polarisationsrichtung vorzusehen, so dass beide Bildinformationen als p-polarisierte Abbildungen dem Fahrer dargestellt werden. Dies hat den Vorteil, dass s-polarisiertes Licht absorbierende Sonnenbrillen die Wahrnehmung der angezeigten Bildinformationen nicht unterdrücken.

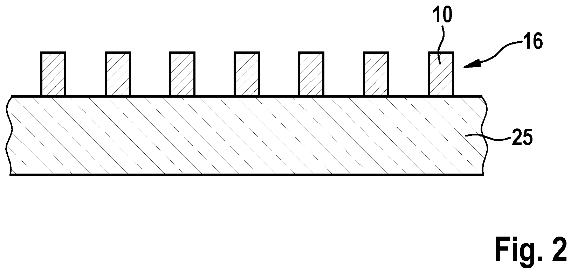

In Figur 2 ist eine Querschnittsdarstellung durch einen Drahtgitter-Polarisator als Polarisationsfilter 26, 9 dargestellt. Der Drahtgitter-Polarisator ist auf der Deckscheibe 25 oder der Innenseite der Frontscheibe im zweiten Anzeigebereich A2 aufgebracht. Man erkennt die parallel zueinander angebrachten vorstehenden Strukturen 10, die sich parallel zueinander erstrecken und vorzugsweise aus einem Metall ausgebildet sind. Beispielsweise kann der Drahtgitter-Polarisator einen Strukturabstand von 50-100nm aufweisen. Die Strukturbreite kann 50-100nm und deren Höhe 100-500nm betragen.

### Bezugszeichenliste

- 1: Frontscheiben-Anzeigesystem
- 2: Head-up-Display-Einrichtung
- 21: Projektionseinrichtung
- 22: Abdeckung
- 23: Spiegel
- 24: Projektor
- 25: Deckscheibe
- 26: erster Polarisationsfilter
- 3: Scheibenwurzel-Display-Einrichtung
- 31: Anzeigeeinrichtung
- 4: Instrumententafel
- 5: Frontscheibe
- 6: Oberseite der Instrumententafel
- 8: Augenbereich
- 6: Oberseite der Instrumententafel
- 9: zweiter Polarisationsfilter
- 10: vorstehende Strukturen
- A1: erster Anzeigebereich
- A2: zweiter Anzeigebereich
- P: Projektionsstrahlenbündel

## Patentansprüche

1. Frontscheibenanzeigesystem (1) für ein Kraftfahrzeug mit einer Head-up-Display-Einrichtung (2), wobei die Head-up-Display-Einrichtung (2) eine Projektionseinrichtung (21) zum Aussenden eines Projektionslichtstrahlenbündels (P) mit einer ersten Bildinformation in Richtung eines ersten Anzeigebereichs (A1) einer Frontscheibe (5), so dass diese dort reflektiert und in einem Augenbereich wahrnehmbar ist, und eine transparente Abdeckung (22) zum Schutz der Projektionseinrichtung (21) aufweist, wobei die Abdeckung (22) eine Deckscheibe (25) und einen ersten Polarisationsfilter (26) aufweist, wobei der erste Polarisationsfilter (26) Licht einer ersten Polarisationsrichtung transmittiert und Licht einer zweiten Polarisationsrichtung vollständig reflektiert,
**dadurch gekennzeichnet, dass**
die Abdeckung (22) so angeordnet und, insbesondere gekrümmt, ausgebildet ist, dass der reflektierte Anteil des Umgebungslichts in der zweiten Polarisationsrichtung größtenteils auf einen Scheibenwurzelbereich (A2) der Frontscheibe (5) reflektiert wird;
wobei der Scheibenwurzelbereich (A2) als Schwarzdruckbereich ausgebildet ist und mit einem zweiten Polarisationsfilter (9) versehen ist, der ausgebildet ist, um Licht einer ersten Polarisationsrichtung zu reflektieren und Licht einer zweiten Polarisationsrichtung zu transmittieren;
wobei eine Scheibenwurzel-Display-Einrichtung (3) angeordnet ist, um über eine Anzeigeeinrichtung (31) eine zweite Bildinformation auszugeben, so dass diese in dem Scheibenwurzelbereich (A2) so reflektiert wird, dass die reflektierte zweite Bildinformation in dem Augenbereich (8) wahrnehmbar ist, wobei die Anzeigeeinrichtung (31) die zweite Bildinformation mit Licht der ersten Polarisationsrichtung ausgibt.

2. Frontscheibenanzeigesystem (1) nach Anspruch 1, wobei der erste und/oder der zweite Polarisationsfilter (26, 9) als Drahtgitter-Polarisator oder als Mehrschicht-Reflexionspolarisator ausgebildet sind.

3. Frontscheibenanzeigesystem (1) nach einem der Ansprüche 1 bis 2, wobei die erste Polarisationsrichtung einer s-Polarisationsrichtung und die zweite Polarisationsrichtung einer p-Polarisationsrichtung entsprechen oder wobei die erste Polarisationsrichtung einer p-Polarisationsrichtung und die zweite Polarisationsrichtung einer s-Polarisationsrichtung entsprechen.

## Claims

1. Windscreen display system (1) for a motor vehicle having a head-up display device (2), wherein the head-up display device (2) has a projection device (21) for emitting a projection light beam (P) having a first item of image information in the direction of a first display region (A1) of a windscreen (5), so that it is reflected there and is perceptible in an eye region, and a transparent cover (22) for protecting the projection device (21), wherein the cover (22) has a cover plate (25) and a first polarization filter (26), wherein the first polarization filter (26) transmits light of a first polarization direction and completely reflects light of a second polarization direction,
**characterized in that** the cover (22) is arranged and formed, in particular curved, such that the reflected component of the ambient light in the second polarization direction is largely reflected onto a window base region (A2) of the windscreen (5);
wherein the window base region (A2) is formed as a black print region and is provided with a second polarization filter (9), which is designed to reflect light of a first polarization direction and transmit light of a second polarization direction;
wherein a window base display device (3) is arranged in order to output a second item of image information via a display device (31), so that it is reflected in the window base region (A2) such that the reflected second item of image information is perceptible in the eye region (8), wherein the display device (31) outputs the second item of image information using light of the first polarization direction.

2. Windscreen display system (1) according to Claim 1, wherein the first and/or the second polarization filter (26, 9) are formed as a wire mesh polarizer or as a multilayer reflection polarizer.

3. Windscreen display system (1) according to either of Claims 1 and 2, wherein the first polarization direction corresponds to an s-polarization direction and the second polarization direction corresponds to a p-polarization direction or wherein the first polarization direction corresponds to a p-polarization direction and the second polarization direction corresponds to an s-polarization direction.

## Revendications

1. Système d'affichage de pare-brise (1) pour un véhicule automobile, comprenant un dispositif d'affichage tête haute (2), dans lequel le dispositif d'affichage tête haute (2) présente un dispositif de projection (21) pour émettre un faisceau de lumière de projection (P) avec une première information d'image en direction d'une première zone d'affichage (A1) d'un pare-brise (5) de sorte qu'elle y est réfléchie et peut être perçue au niveau des yeux, et un recouvrement transparent (22) pour protéger le dispositif de projection (21), dans lequel le recouvrement (22) présente une plaque de couverture (25) et un premier filtre de polarisation (26), dans lequel le premier filtre de polarisation (26) laisse passer la lumière d'une première direction de polarisation et réfléchit complètement la lumière d'une deuxième direction de polarisation,
**caractérisé en ce que** le recouvrement (22) est disposé et réalisé, en particulier de manière courbe, de telle sorte que la partie réfléchie de la lumière ambiante dans la deuxième direction de polarisation est pour la plupart réfléchie sur une zone de base de vitre (A2) du pare-brise (5) ;
dans lequel la zone de base de vitre (A2) est réalisée sous la forme d'une zone à impression noire et est munie d'un deuxième filtre de polarisation (9) qui est réalisé pour réfléchir la lumière d'une première direction de polarisation et pour laisser passer la lumière d'une deuxième direction de polarisation ;
dans lequel un dispositif d'affichage de base de vitre (3) est disposé pour émettre une deuxième information d'image par l'intermédiaire d'un dispositif d'affichage (31) de sorte qu'elle est réfléchie dans la zone de base de vitre (A2) de telle sorte que la deuxième information d'image réfléchie peut être perçue au niveau des yeux (8), dans lequel le dispositif d'affichage (31) émet la deuxième information d'image avec la lumière de la première direction de polarisation.

2. Système d'affichage de pare-brise (1) selon la revendication 1, dans lequel le premier et/ou le deuxième filtre de polarisation (26, 9) sont réalisés sous forme de polariseur à grille métallique ou de polariseur réfléchissant multicouche.

3. Système d'affichage de pare-brise (1) selon l'une quelconque des revendications 1 à 2, dans lequel la première direction de polarisation correspond à une direction de polarisation s, et la deuxième direction de polarisation correspond à une direction de polarisation p, ou dans lequel la première direction de polarisation correspond à une direction de polarisation p et la deuxième direction de polarisation correspond à une direction de polarisation s.
